# EUROPÄISCHE PATENTSCHRIFT

(11) **EP 3 612 737 B1**
(45) Veröffentlichungstag und Bekanntmachung des Hinweises auf die Patenterteilung: **22.02.2023**
(21) Anmeldenummer: 18718157.3
(22) Anmeldetag: 18.04.2018
(51) Int. Cl.: F16B 4/00

(54) **BEFESTIGUNGSVERFAHREN UND BEFESTIGUNGSSYSTEM**
FASTENING METHOD AND FASTENING SYSTEM
PROCÉDÉ DE FIXATION ET SYSTÈME DE FIXATION

(30) Priorität: 19.04.2017 EP 17167112
(43) Veröffentlichungstag der Anmeldung: 26.02.2020
(60) Teilanmeldung: 23151510.7
(73) Patentinhaber: Hilti Aktiengesellschaft, 9494 Schaan (LI)
(72) Erfinder: POPP, Uwe, 9443 Widnau (CH); STAHEL, Simon, 7000 Chur (CH); SCHNEIDER, Jens, 6800 Feldkirch (AT)
(74) Vertreter: Hilti Aktiengesellschaft Corporate Intellectual Property
(86) Internationale Anmeldenummer: PCT/EP2018/059914
(87) Internationale Veröffentlichungsnummer: WO 2018/192979

(56) Entgegenhaltungen:
- EP-A1- 2 157 322
- JP-A- S5 830 510
- JP-A- 2010 190 342

## Beschreibung

Die vorliegende Erfindung betrifft ein Verfahren zur Befestigung eines Befestigungselements an einem Untergrund, bei dem in dem Untergrund ein Sackloch erzeugt und ein Befestigungselement in dem Sackloch verankert wird. Weiterhin betrifft die Erfindung ein Befestigungssystem mit einem Untergrund und einem daran befestigten Befestigungselement.

Es sind Befestigungsverfahren und -systeme bekannt, bei denen ein Schaft des Befestigungselements eine in eine Befestigungsrichtung weisende Stirnfläche aufweist, also stumpf ist, wobei sich an die Stirnfläche eine Umfangsfläche anschliesst. Die Aussenabmessungen der Stirnfläche übersteigen einen Durchmesser des Sacklochs, so dass der Schaft beim Eintreiben in das Sackloch einen Teil des Untergrundmaterials verschiebt und an der Umfangsfläche mit dem Untergrund verschweisst wird. Die Verschweissung trägt zur Haltekraft des Befestigungselements an dem Untergrund bei.

Aus EP 2 157 322 A1 ist ein Verfahren zur Befestigung eines Befestigungselements an einem Untergrund bekannt, bei dem zunächst eine Metallscheibe auf dem Untergrund aufgeklebt und dann in dem so gebildeten Stapel aus der Metallscheibe und dem Untergrund ein Sackloch erzeugt wird. Durch die lokale Verdickung des Untergrunds mittels der aufgeklebten Metallscheibe wird beim Eintreiben eines Befestigungselements in das Sackloch genügend Reibungswärme erzeugt, um eine stoffschlüssige Verbindung zwischen dem Befestigungselement und dem Untergrund zu erreichen.

Die Aufgabe der vorliegenden Erfindung besteht darin, ein Befestigungsverfahren und ein Befestigungssystem anzugeben, bei denen bei gegebener Sacklochtiefe eine grosse Haltekraft des Befestigungselements an dem Untergrund gewährleistet ist.

Die Aufgabe wird einerseits gelöst durch ein Verfahren zur Befestigung eines aus einem ersten Material bestehenden Befestigungselements an einem aus einem Untergrundmaterial bestehenden Untergrund, bei dem ein eine Tiefenrichtung definierendes Sackloch mit einem Sacklochdurchmesser in dem Untergrund erzeugt wird, ein Befestigungselement zur Verfügung gestellt wird, welches einen eine Befestigungsrichtung definierenden Schaft mit einer im Wesentlichen in die Befestigungsrichtung weisenden Stirnfläche und mit einer sich unmittelbar an die Stirnfläche anschliessenden Umfangsfläche aufweist, und der Schaft in das Sackloch eingetrieben wird, um das Befestigungselement in dem Sackloch zu verankern. Die Aussenabmessungen der Stirnfläche übersteigen dabei den Sacklochdurchmesser, so dass der Schaft beim Eintreiben in das Sackloch einen Teil des Untergrundmaterials in der Tiefenrichtung verschiebt und an der Umfangsfläche mit dem Untergrund verschweisst wird. Die Umfangsfläche ist gegenüber der Befestigungsrichtung geneigt oder gestuft.

Die Aufgabe wird andererseits gelöst durch ein Befestigungssystem, umfassend einen aus einem Untergrundmaterial bestehenden Untergrund und ein Befestigungselement, welches einen eine Befestigungsrichtung definierenden Schaft mit einer im Wesentlichen in die Befestigungsrichtung weisenden Stirnfläche und mit einer sich unmittelbar an die Stirnfläche anschliessenden Umfangsfläche aufweist, wobei der Schaft mit dem Untergrund verschweisst ist, und wobei die Umfangsfläche gegenüber der Befestigungsrichtung geneigt oder gestuft ist.

Eine vorteilhafte Ausführungsform kennzeichnet sich dadurch aus, dass das Befestigungselement einen Verankerungsbereich, welcher in dem Sackloch verankert wird und den Schaft aufweist, und einen nach der Verankerung von dem Basiselement abragenden Verbindungsbereich zum Verbinden eines Anbauteils mit dem Befestigungselement aufweist.

Eine vorteilhafte Ausführungsform kennzeichnet sich dadurch aus, dass eine senkrecht zur Befestigungsrichtung orientierte Querschnittsfläche des Schaftes Aussenabmessungen aufweist, welche von der Stirnfläche ausgehend entlang der Befestigungsrichtung stetig zunehmen. Bevorzugt weist die Querschnittsfläche die Form eines Kreises auf, wobei die Aussenabmessungen einen Durchmesser des Kreises umfassen. Besonders bevorzugt weist die Umfangsfläche die Form eines Kegelstumpfs auf.

Eine vorteilhafte Ausführungsform kennzeichnet sich dadurch aus, dass die Umfangsfläche gegenüber der Befestigungsrichtung, ausgehend von der Stirnfläche entgegen der Befestigungsrichtung mehrere verschiedene Neigungswinkel aufweist.

Eine vorteilhafte Ausführungsform kennzeichnet sich dadurch aus, dass ein Neigungswinkel der Umfangsfläche gegenüber der Befestigungsrichtung zwischen 1° und 6° beträgt. Bevorzugt beträgt der Neigungswinkel zwischen 1,5° und 5°, besonders bevorzugt zwischen 2° und 4°.

Eine vorteilhafte Ausführungsform kennzeichnet sich dadurch aus, dass die Stirnfläche an ihrem Rand eine insbesondere umlaufende Einführschräge für ein erleichtertes Einführen des Schaftes in das Sackloch umfasst. Bevorzugt umfasst die Einführschräge eine Fase.

Eine vorteilhafte Ausführungsform kennzeichnet sich dadurch aus, dass der Sacklochdurchmesser in der Tiefenrichtung gleich bleibt.

Eine vorteilhafte Ausführungsform kennzeichnet sich dadurch aus, dass das Sackloch in den Untergrund gebohrt wird. Bevorzugt wird eine Tiefe T des Sacklochs mit Hilfe eines Anschlagbohrers vorbestimmt. Ebenfalls bevorzugt wird eine Tiefe T des Sacklochs mit Hilfe eines Tiefenanschlags vorbestimmt.

Eine vorteilhafte Ausführungsform kennzeichnet sich dadurch aus, dass das Sackloch in der Tiefenrichtung eine Tiefe T mit T < 10 mm aufweist. Bevorzugt ist die Tiefe T < 8 mm, besonders bevorzugt ist die Tiefe T < 6 mm.

Eine vorteilhafte Ausführungsform kennzeichnet sich dadurch aus, dass der Schaft linear in das Sackloch eingetrieben wird. Bevorzugt wird dafür ein Bolzensetzgerät verwendet.

Eine vorteilhafte Ausführungsform kennzeichnet sich dadurch aus, dass ein Eintreibwinkel zwischen einer Oberfläche des Untergrunds und der Tiefenrichtung mindestens 80° beträgt. Bevorzugt beträgt der Eintreibwinkel mindestens 85°, besonders bevorzugt 90°.

Eine vorteilhafte Ausführungsform kennzeichnet sich dadurch aus, dass das erste Material ein Metall oder eine Legierung umfasst. Besonders bevorzugt besteht das erste Material aus einem Metall oder einer Legierung.

Eine vorteilhafte Ausführungsform kennzeichnet sich dadurch aus, dass das Untergrundmaterial ein Metall oder eine Legierung umfasst. Besonders bevorzugt besteht das Untergrundmaterial aus einem Metall oder einer Legierung.

Die Erfindung wird nachstehend anhand von Ausführungsbeispielen unter Bezugnahme auf die Zeichnungen näher erläutert. Es zeigen:
- Fig. 1: ein Befestigungssystem in einer Querschnittsansicht,
- Fig. 2: ein Befestigungselement in einer Teilansicht und
- Fig. 3: ein Befestigungselement in einer Teilansicht.

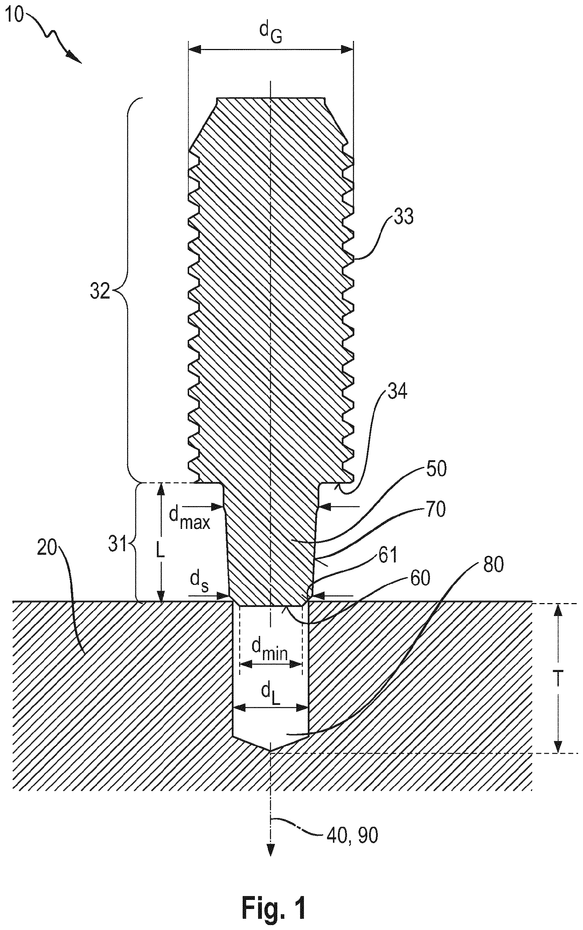

In Fig. 1 ist ein Befestigungssystem 10 mit einem aus einem Untergrundmaterial bestehenden Untergrund 20 und einem Befestigungselement 30 dargestellt. Das Befestigungselement 30 weist einen Verankerungsbereich 31 und einen nach der Verankerung von dem Basiselement abragenden Verbindungsbereich 32 auf. Der Verankerungsbereich 31 dient einem Verankern des Befestigungselements 30 in dem Untergrund 20, und der Verbindungsbereich 32 dient einem Verbinden eines nicht dargestellten Anbauteils mit dem Befestigungselement 30. Zu diesem Zweck weist der Verbindungsbereich 32 ein Aussengewinde 33 mit einem Gewindedurchmesser d_{G} von beispielsweise 8 mm oder 10 mm auf. Der Verankerungsbereich 31 hat demgegenüber einen kleineren Aussendurchmesser, so dass das Befestigungselement 30 zwischen dem Verankerungsbereich 31 und dem Verbindungsbereich 32 eine Anschlagschulter 34 aufweist. Die Anschlagschulter 34 liegt auf einer Oberfläche 21 des Untergrunds 20 auf, und zwar unmittelbar oder gegebenenfalls mittelbar über eine nicht dargestellte Dichtscheibe, wenn der Verankerungsbereich 31 in dem Untergrund 20 verankert ist.

Der Verankerungsbereich 31 umfasst einen eine Befestigungsrichtung 40 definierenden Schaft 50 mit einer im Wesentlichen in die Befestigungsrichtung 40 weisenden, einen Stirnflächendurchmesser d_{S} aufweisenden Stirnfläche 60 und mit einer sich unmittelbar an die Stirnfläche 60 anschliessenden Umfangsfläche 70. Eine senkrecht zur Befestigungsrichtung 40 orientierte Querschnittsfläche des Schaftes 50 weist die Form eines Kreises auf, dessen Durchmesser von der Stirnfläche 60 ausgehend entgegen der Befestigungsrichtung 40 stetig und gleichförmig zunimmt, so dass die Umfangsfläche 70 die Form eines Kegelstumpfs aufweist. Ein Kegelöffnungswinkel dieses Kegelstumpfs ist 6°, so dass die Umfangsfläche 70 gegenüber der Befestigungsrichtung 40 um einen Winkel von 3° geneigt ist. Der Durchmesser der Querschnittsfläche des Schaftes 50 steigt dann von dem Stirnflächendurchmesser d_{S} bis zu einem maximalen Schaftdurchmesser dₘₐₓ an. Der Stirnflächendurchmesser ds beträgt beispielsweise 4,3 mm, 4,9 mm oder 5,0 mm, der maximale Schaftdurchmesser dₘₐₓ beträgt beispielsweise 5,2 mm, 5,4 mm oder 5,8 mm, jeweils bei einer Schaftlänge L von beispielsweise 6,7 mm oder 7,5 mm.

Der Verankerungsbereich 31 und der Verbindungsbereich 32 sind einstückig aus einem schweissbaren ersten Material, wie beispielsweise aus einem Metall oder einer Legierung wie Stahl hergestellt. Das Untergrundmaterial umfasst ebenfalls ein schweissbares Material, wie beispielsweise Metall oder eine Legierung wie Stahl. Der Untergrund 20 umfasst insbesondere eine an seiner Oberfläche angeordnete Beschichtung, beispielsweise eine Korrosionsschutzschicht, welche bevorzugt ebenfalls ein schweissbares Material, wie beispielsweise Metall oder eine Legierung wie Stahl, umfasst.

Zur Befestigung des Befestigungselements 30 an dem Untergrund 20 wird zunächst ein eine Tiefenrichtung 90 definierendes Sackloch 80 mit einem in der Tiefenrichtung 90 gleichbleibenden Sacklochdurchmesser d_{L} und mit einer Tiefe T in den Untergrund 20 gebohrt. Der Sacklochdurchmesser d_{L} und die Tiefe T werden dabei bevorzugt mittels eines Stufenbohrers vorbestimmt. Die Tiefe T beträgt beispielsweise 6 mm, der Sacklochdurchmesser d_{L} ist bevorzugt mindestens 0,1 mm kleiner als der Stirnflächendurchmesser ds, besonders bevorzugt mindestens 0,2 mm kleiner als der Stirnflächendurchmesser ds, beispielsweise 0,2 mm, 0,25 mm oder 0,3 mm kleiner als der Stirnflächendurchmesser ds. Bevorzugt beträgt der Sacklochdurchmesser d_{L} weniger als das 0,98-fache des Stirnflächendurchmesser ds, besonders bevorzugt weniger als das 0,96-fache des Stirnflächendurchmesser ds. Danach wird der Schaft 50 linear in das Sackloch 80 eingetrieben, beispielsweise unter Verwendung eines Bolzensetzgeräts. Ein Eintreibwinkel zwischen der Oberfläche 21 des Untergrunds 20 und der Tiefenrichtung 90 beträgt 90°, so dass die Befestigungsrichtung 40 mit der Tiefenrichtung 90 zusammenfällt.

Dadurch, dass der Sacklochdurchmesser d_{L} kleiner als der Stirnflächendurchmesser d_{S} ist, verschiebt der Schaft 50 beim Eintreiben in das Sackloch 80 einen Teil des Untergrundmaterials in der Tiefenrichtung 90. Die dabei entstehende Hitze bewirkt ein Verschweissen des Schaftes 50 an der Umfangsfläche 70 mit dem Untergrund 20 an dem Bohrloch 80. Durch die Neigung der Umfangsfläche 70 gegenüber der Befestigungsrichtung 40 wird diese Verschweissung und/oder ein Verspannen des Schaftes 50 in dem Sackloch 80 verbessert und eine Haltekraft des Befestigungselements 30 an dem Untergrund 20 erhöht.

Eine signifikante Erhöhung der Haltekraft des Befestigungselements an dem Untergrund ist bei einem Neigungswinkel der Umfangsfläche gegenüber der Befestigungsrichtung grösser als 1° zu beobachten, wobei bei einem Neigungswinkel grösser 6° der Energieaufwand für die Verdrängung des Untergrundmaterials auf Kosten der Verschweissung signifikant ansteigt. Beispielsweise bei einer üblichen Eintreibenergie von 80 Joule beträgt der Neigungswinkel der Umfangsfläche gegenüber der Befestigungsrichtung daher vorteilhaft zwischen 1° und 6°. Bevorzugt beträgt der Neigungswinkel zwischen 1,5° und 5°, besonders bevorzugt zwischen 2° und 4°.

Die Stirnfläche 60 umfasst an ihrem Rand eine als umlaufende Fase ausgebildete Einführschräge 61 für ein erleichtertes Einführen des Schaftes 50 in das Sackloch 80. Ein minimaler Durchmesser dₘᵢₙ der Einführschräge 61 ist dafür vorteilhaft kleiner als der Sacklochdurchmesser d_{L}. Ein Kegelöffnungswinkel der Einführschräge 61 beträgt bevorzugt zwischen 60° und 150°, besonders bevorzugt zwischen 75° und 135°, beispielsweise 90° oder 120°.

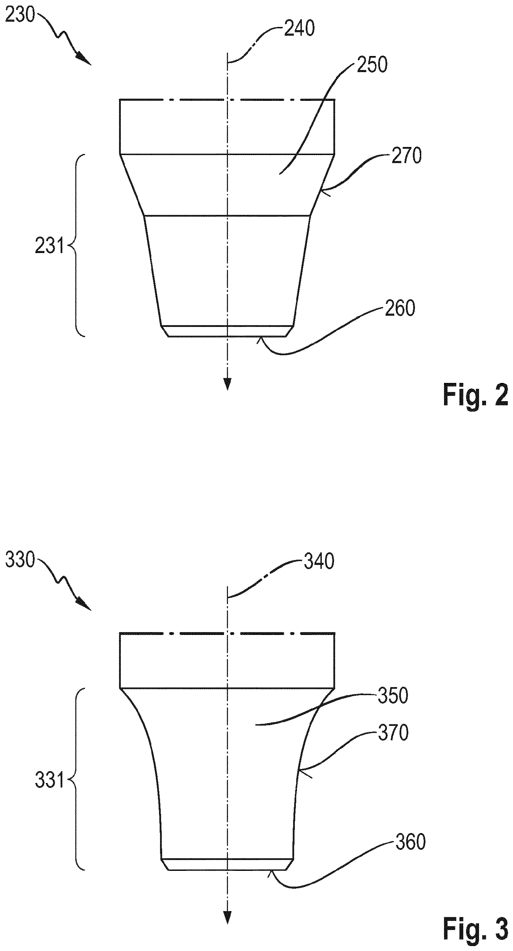

In Fig. 2 ist ein Befestigungselement 230 in einer Teilansicht dargestellt. Das Befestigungselement 230 umfasst einen Verankerungsbereich 231 mit einem eine Befestigungsrichtung 240 definierenden Schaft 250. Der Schaft 250 weist eine im Wesentlichen in die Befestigungsrichtung 240 weisende Stirnfläche 260 und eine sich unmittelbar an die Stirnfläche 260 anschliessende Umfangsfläche 270 auf. Die Umfangsfläche 270 weist die Form mehrerer, insbesondere genau zweier Kegelstümpfe auf, so dass die Umfangsfläche 270 gegenüber der Befestigungsrichtung 240, ausgehend von der Stirnfläche 260 entgegen der Befestigungsrichtung 240 mehrere verschiedene Neigungswinkel aufweist. Ein Kegelöffnungswinkel dieser Kegelstümpfe steigt entgegen der Befestigungsrichtung 240 an, so dass sich der Schaft 250 entgegen der Befestigungsrichtung 240 immer mehr aufweitet. Im Übrigen stimmt das Befestigungselement 230 mit dem in Fig. 1 dargestellten Befestigungselement 30 im Wesentlichen überein.

In Fig. 3 ist ein Befestigungselement 330 in einer Teilansicht dargestellt. Das Befestigungselement 330 umfasst einen Verankerungsbereich 331 mit einem eine Befestigungsrichtung 340 definierenden Schaft 350. Der Schaft 350 weist eine im Wesentlichen in die Befestigungsrichtung 340 weisende Stirnfläche 360 und eine sich unmittelbar an die Stirnfläche 360 anschliessende Umfangsfläche 370 auf. Die Umfangsfläche 370 weist gegenüber der Befestigungsrichtung 340 einen ausgehend von der Stirnfläche 360 entgegen der Befestigungsrichtung 340 allmählich ansteigenden Neigungswinkel auf, so dass sich der Schaft 350 entgegen der Befestigungsrichtung 340 trompetenartig aufweitet. Im Übrigen stimmt das Befestigungselement 330 mit dem in Fig. 1 dargestellten Befestigungselement 30 im Wesentlichen überein.

Bei nicht dargestellten Ausführungsbeispielen ist der Schaft entgegen der Befestigungsrichtung stufenartig aufgeweitet, so dass die Umfangsfläche gegenüber der Befestigungsrichtung gestuft ist.

Die Erfindung wurde anhand eines Verfahrens für eine Befestigung eines Befestigungselements an einem Untergrund beschrieben. Die Merkmale der beschriebenen Ausführungsformen sind dabei auch beliebig miteinander innerhalb eines einzigen Befestigungssystems beziehungsweise eines einzigen Verfahrens kombinierbar. Es wird darauf hingewiesen, dass das erfindungsgemässe Verfahren auch für andere Zwecke geeignet ist.

## Patentansprüche

1. Verfahren zur Befestigung eines aus einem ersten Material bestehenden Befestigungselements (30) an einem aus einem Untergrundmaterial bestehenden Untergrund (20), mit den folgenden Verfahrensschritten:
- Erzeugen eines eine Tiefenrichtung definierenden Sacklochs (80) mit einem Sacklochdurchmesser in dem Untergrund (20),
- Zur-Verfügung-Stellen eines Befestigungselements (30), welches einen eine Befestigungsrichtung definierenden Schaft (50) mit einer im Wesentlichen in die Befestigungsrichtung weisenden Stirnfläche (60) und mit einer sich unmittelbar an die Stirnfläche (60) anschliessenden Umfangsfläche (70) aufweist,
- Eintreiben des Schaftes in das Sackloch (80), um das Befestigungselement (30) in dem Sackloch (80) zu verankern,
wobei die Aussenabmessungen der Stirnfläche (60) den Sacklochdurchmesser übersteigen, so dass der Schaft (50) beim Eintreiben in das Sackloch (80) einen Teil des Untergrundmaterials in der Tiefenrichtung verschiebt und an der Umfangsfläche (70) mit dem Untergrund (20) verschweisst wird,
und wobei die Umfangsfläche (70) gegenüber der Befestigungsrichtung geneigt oder gestuft ist.

2. Verfahren nach Anspruch 1, wobei das Befestigungselement (30) einen Verankerungsbereich (31), welcher in dem Sackloch (80) verankert wird und den Schaft (50) aufweist, und einen nach der Verankerung von dem Basiselement abragenden Verbindungsbereich (32) zum Verbinden eines Anbauteils mit dem Befestigungselement (30) aufweist.

3. Verfahren nach einem der vorhergehenden Ansprüche, wobei eine senkrecht zur Befestigungsrichtung orientierte Querschnittsfläche des Schaftes Aussenabmessungen aufweist, welche von der Stirnfläche (60) ausgehend entlang der Befestigungsrichtung stetig zunehmen.

4. Verfahren nach dem vorhergehenden Anspruch, wobei die Querschnittsfläche die Form eines Kreises aufweist, und wobei die Aussenabmessungen einen Durchmesser des Kreises umfassen.

5. Verfahren nach einem der vorhergehenden Ansprüche, wobei die Umfangsfläche (70) die Form eines Kegelstumpfs aufweist.

6. Verfahren nach einem der vorhergehenden Ansprüche, wobei die Umfangsfläche (70) gegenüber der Befestigungsrichtung, ausgehend von der Stirnfläche (60) entgegen der Befestigungsrichtung mehrere verschiedene Neigungswinkel aufweist.

7. Verfahren nach einem der vorhergehenden Ansprüche, wobei der Schaft (50) linear in das Sackloch (80) eingetrieben wird, insbesondere mittels eines Bolzensetzgeräts.

8. Verfahren nach einem der vorhergehenden Ansprüche, wobei das erste Material und/oder das Untergrundmaterial ein Metall oder eine Legierung umfasst, insbesondere aus einem Metall oder einer Legierung besteht.

9. Befestigungssystem, umfassend einen aus einem Untergrundmaterial bestehenden Untergrund (20) und ein Befestigungselement (30), welches einen eine Befestigungsrichtung definierenden Schaft (50) mit einer im Wesentlichen in die Befestigungsrichtung weisenden Stirnfläche (60) und mit einer sich unmittelbar an die Stirnfläche (60) anschliessenden Umfangsfläche (70) aufweist, wobei der Schaft (50) mit dem Untergrund (20) verschweisst ist, und wobei die Umfangsfläche (70) gegenüber der Befestigungsrichtung geneigt oder gestuft ist.

10. Befestigungssystem nach dem vorhergehenden Anspruch, wobei das Befestigungselement (30) einen Verankerungsbereich (31), welcher in dem Sackloch (80) verankert ist und den Schaft (50) aufweist, und einen von dem Basiselement abragenden Verbindungsbereich (32) zum Verbinden eines Anbauteils mit dem Befestigungselement (30) aufweist.

11. Befestigungssystem nach einem der Ansprüche 9 bis 10, wobei eine senkrecht zur Befestigungsrichtung orientierte Querschnittsfläche des Schaftes Aussenabmessungen aufweist, welche von der Stirnfläche (60) ausgehend entlang der Befestigungsrichtung stetig zunehmen.

12. Befestigungssystem nach dem vorhergehenden Anspruch, wobei die Querschnittsfläche die Form eines Kreises aufweist, und wobei die Aussenabmessungen einen Durchmesser des Kreises umfassen.

13. Befestigungssystem nach einem der Ansprüche 9 bis 12, wobei die Umfangsfläche (70) die Form eines Kegelstumpfs aufweist.

14. Befestigungssystem nach einem der Ansprüche 9 bis 13, wobei die Umfangsfläche (70) gegenüber der Befestigungsrichtung, ausgehend von der Stirnfläche (60) entgegen der Befestigungsrichtung mehrere verschiedene Neigungswinkel aufweist.

15. Befestigungssystem nach einem der Ansprüche 9 bis 14, wobei das erste Material und/oder das Untergrundmaterial ein Metall oder eine Legierung umfasst, insbesondere aus einem Metall oder einer Legierung besteht.

## Claims

1. Method for fastening a fastening element (30), which consists of a first material, to a substrate (20), which consists of a substrate material, comprising the following method steps:
- producing a blind hole (80), which defines a depth direction, with a blind hole diameter in the substrate (20),
- providing a fastening element (30) which has a shaft (50), which defines a fastening direction, having an end face (60), which points substantially in the fastening direction, and having a circumferential face (70) which directly adjoins the end face (60),
- driving the shaft into the blind hole (80) in order to anchor the fastening element (30) in the blind hole (80),
wherein the external dimensions of the end face (60) exceed the blind hole diameter such that the shaft (50), when being driven into the blind hole (80), displaces part of the substrate material in the depth direction and is welded at the circumferential face (70) to the substrate (20),
and wherein the circumferential face (70) is inclined or stepped with respect to the fastening direction.

2. Method according to Claim 1, wherein the fastening element (30) has an anchoring region (31), which is anchored in the blind hole (80) and has the shaft (50), and has a connecting region (32), which projects from the base element after the anchoring operation, for connecting an attachment part to the fastening element (30).

3. Method according to one of the preceding claims, wherein a cross-sectional area, which is oriented perpendicularly to the fastening direction, of the shaft has external dimensions which, starting from the end face (60), increase continuously along the fastening direction.

4. Method according to the preceding claim, wherein the cross-sectional area has the shape of a circle, and wherein the external dimensions comprise a diameter of the circle.

5. Method according to one of the preceding claims, wherein the circumferential face (70) has the shape of a truncated cone.

6. Method according to one of the preceding claims, wherein, starting from the end face (60), counter to the fastening direction, the circumferential face (70) has a plurality of different angles of inclination with respect to the fastening direction.

7. Method according to one of the preceding claims, wherein the shaft (50) is driven linearly into the blind hole (80), in particular by means of a bolt-firing tool.

8. Method according to one of the preceding claims, wherein the first material and/or the substrate material comprises a metal or an alloy, in particular consists of a metal or an alloy.

9. Fastening system, comprising a substrate (20), which consists of a substrate material, and a fastening element (30) which has a shaft (50), which defines a fastening direction, having an end face (60), which points substantially in the fastening direction, and having a circumferential face (70) which directly adjoins the end face (60), wherein the shaft (50) is welded to the substrate (20), and wherein the circumferential face (70) is inclined or stepped with respect to the fastening direction.

10. Fastening system according to the preceding claim, wherein the fastening element (30) has an anchoring region (31), which is anchored in the blind hole (80) and has the shaft (50), and has a connecting region (32), which projects from the base element, for connecting an attachment part to the fastening element (30).

11. Fastening system according to one of Claims 9 to 10, wherein a cross-sectional area, which is oriented perpendicularly to the fastening direction, of the shaft has external dimensions which, starting from the end face (60), increase continuously along the fastening direction.

12. Fastening system according to the preceding claim, wherein the cross-sectional area has the shape of a circle, and wherein the external dimensions comprise a diameter of the circle.

13. Fastening system according to one of Claims 9 to 12, wherein the circumferential face (70) has the shape of a truncated cone.

14. Fastening system according to one of Claims 9 to 13, wherein, starting from the end face (60), counter to the fastening direction, the circumferential face (70) has a plurality of different angles of inclination with respect to the fastening direction.

15. Fastening system according to one of Claims 9 to 14, wherein the first material and/or the substrate material comprises a metal or an alloy, in particular consists of a metal or an alloy.

## Revendications

1. Procédé de fixation d'un élément de fixation (30) constitué d'un premier matériau sur un substrat (20) constitué d'un matériau de substrat, comprenant les étapes de procédé suivantes :
- la réalisation d'un trou borgne (80) définissant une direction de profondeur, présentant un diamètre de trou borgne, dans le substrat (20),
- la mise à disposition d'un élément de fixation (30) qui présente une tige (50) définissant une direction de fixation, avec une surface frontale (60) orientée essentiellement dans la direction de fixation et avec une surface périphérique (70) se raccordant directement à la surface frontale (60),
- l'enfoncement de la tige dans le trou borgne (80), afin d'ancrer l'élément de fixation (30) dans le trou borgne (80),
dans lequel les dimensions extérieures de la surface frontale (60) dépassent le diamètre du trou borgne, de telle sorte que la tige (50), lors de l'enfoncement dans le trou borgne (80), déplace une partie du matériau de substrat dans la direction de profondeur et est soudée au substrat (20) au niveau de la surface périphérique (70),
et dans lequel la surface périphérique (70) est inclinée ou échelonnée par rapport à la direction de fixation.

2. Procédé selon la revendication 1, dans lequel l'élément de fixation (30) présente une zone d'ancrage (31) qui est ancrée dans le trou borgne (80) et qui présente la tige (50), et une zone de liaison (32) qui fait saillie de l'élément de base après l'ancrage pour relier une pièce rapportée à l'élément de fixation (30).

3. Procédé selon l'une quelconque des revendications précédentes, dans lequel une surface de section transversale de la tige, orientée perpendiculairement à la direction de fixation, présente des dimensions extérieures qui augmentent de manière continue à partir de la surface frontale (60) le long de la direction de fixation.

4. Procédé selon la revendication précédente, dans lequel la surface de section transversale présente la forme d'un cercle, et dans lequel les dimensions extérieures comprennent un diamètre du cercle.

5. Procédé selon l'une quelconque des revendications précédentes, dans lequel la surface périphérique (70) présente la forme d'un cône tronqué.

6. Procédé selon l'une quelconque des revendications précédentes, dans lequel la surface périphérique (70) présente plusieurs angles d'inclinaison différents par rapport à la direction de fixation, à partir de la surface frontale (60) à l'encontre de la direction de fixation.

7. Procédé selon l'une quelconque des revendications précédentes, dans lequel la tige (50) est enfoncée linéairement dans le trou borgne (80), notamment au moyen d'un appareil de pose de boulons.

8. Procédé selon l'une quelconque des revendications précédentes, dans lequel le premier matériau et/ou le matériau de substrat comprend un métal ou un alliage, notamment est constitué d'un métal ou d'un alliage.

9. Système de fixation, comprenant un substrat (20) constitué d'un matériau de substrat et un élément de fixation (30), qui présente une tige (50) définissant une direction de fixation, avec une surface frontale (60) orientée essentiellement dans la direction de fixation et avec une surface périphérique (70) se raccordant directement à la surface frontale (60), dans lequel la tige (50) est soudée au substrat (20), et dans lequel la surface périphérique (70) est inclinée ou échelonnée par rapport à la direction de fixation.

10. Système de fixation selon la revendication précédente, dans lequel l'élément de fixation (30) présente une zone d'ancrage (31) qui est ancrée dans le trou borgne (80) et qui présente la tige (50), et une zone de liaison (32) qui fait saillie de l'élément de base pour relier une pièce rapportée à l'élément de fixation (30).

11. Système de fixation selon l'une quelconque des revendications 9 à 10, dans lequel une surface de section transversale de la tige, orientée perpendiculairement à la direction de fixation, présente des dimensions extérieures qui augmentent de manière continue à partir de la surface frontale (60) le long de la direction de fixation.

12. Système de fixation selon la revendication précédente, dans lequel la surface de section transversale présente la forme d'un cercle et dans lequel les dimensions extérieures comprennent un diamètre du cercle.

13. Système de fixation selon l'une quelconque des revendications 9 à 12, dans lequel la surface périphérique (70) présente la forme d'un cône tronqué.

14. Système de fixation selon l'une quelconque des revendications 9 à 13, dans lequel la surface périphérique (70) présente plusieurs angles d'inclinaison différents par rapport à la direction de fixation, à partir de la surface frontale (60) à l'encontre de la direction de fixation.

15. Système de fixation selon l'une quelconque des revendications 9 à 14, dans lequel le premier matériau et/ou le matériau de substrat comprend un métal ou un alliage, notamment est constitué d'un métal ou d'un alliage.
